# EUROPÄISCHE PATENTSCHRIFT

(11) **EP 3 393 830 B1**
(45) Veröffentlichungstag und Bekanntmachung des Hinweises auf die Patenterteilung: **18.09.2019**
(21) Anmeldenummer: 16825381.3
(22) Anmeldetag: 20.12.2016
(51) Int. Cl.: B60C 23/04

(54) **VERFAHREN UND VORRICHTUNG ZUR ÜBERTRAGUNG VON DATEN VON EINER AN EINEM RAD EINES FAHRZEUGES ANGEORDNETEN RADEINHEIT ZU EINER ZENTRALEINHEIT DES FAHRZEUGES**
METHOD AND DEVICE FOR TRANSMITTING DATA FROM A WHEEL UNIT ARRANGED ON A WHEEL OF A VEHICLE TO A CENTRAL UNIT OF THE VEHICLE
PROCÉDÉ ET DISPOSITIF DE TRANSMISSION DE DONNÉES D'UNE UNITÉ DE ROUE AGENCÉE SUR UNE ROUE D'UN VÉHICULE À UNE UNITÉ CENTRALE DU VÉHICULE

(30) Priorität: 23.12.2015 DE 102015226616
(43) Veröffentlichungstag der Anmeldung: 31.10.2018
(73) Patentinhaber: Continental Automotive GmbH, 30165 Hannover (DE)
(72) Erfinder: KUCHLER, Gregor, verstorben (DE); FISCHER, Frank, 93057 Regensburg (DE)
(86) Internationale Anmeldenummer: PCT/EP2016/081972
(87) Internationale Veröffentlichungsnummer: WO 2017/108823

(56) Entgegenhaltungen:
- EP-A1- 1 336 512
- US-A1- 2004 046 651
- US-A1- 2005 104 715
- US-A1- 2005 109 094

## Beschreibung

Die vorliegende Erfindung betrifft ein Verfahren und eine Vorrichtung zur Übertragung von Daten von einer an einem Rad eines Fahrzeuges angeordneten Radeinheit zu einer Zentraleinheit des Fahrzeuges.

Verfahren und Vorrichtungen zur Datenübertragung in einem Fahrzeug sind bei Reifendruckkontrollsystemen beispielsweise aus der DE 10 2005 005 560 B4, der DE 197 37 945 B4, der EP 1 336 512 A1, der US 2004/046651 A1 und der US 2005/104715 A1 bekannt.

Mittels derartiger Reifendruckkontrollsysteme können vorteilhaft ein oder mehrere Reifendrücke an einem mit bereiften Rädern ausgestatteten Fahrzeug überwacht werden. So kann z. B. im Falle eines übermäßigen Druckverlustes eine entsprechende Warnmeldung an einen Fahrer des Fahrzeuges ausgegeben und/oder eine entsprechende Information an eine Bordelektronik des Fahrzeuges bereitgestellt werden.

Bei einem Reifendruckkontrollsystem enthalten die Daten, die von einer an einem Rad des Fahrzeuges verbauten elektronischen Radeinheit zu einer Zentraleinheit des Fahrzeuges übertragen werden, typischerweise zumindest eine Information über den Reifendruck des betreffenden Rades.

Des Weiteren können die Daten einen Identifikationscode zur Identifikation der betreffenden Radeinheit enthalten, um insbesondere im Falle mehrerer, jeweils an einem von mehreren Rädern verbauten Radeinheiten die jeweils übertragenen Daten der richtigen, d. h. diese Daten sendenden Radeinheit, zuordnen zu können.

Ferner ist es bei Reifendruckkontrollsystemen bereits bekannt, dass mit den Daten zusätzlich zu einer Information über den Reifendruck auch eine Information über wenigstens einen anderen Radbetriebsparameter übertragen wird, wie z. B. eine Reifentemperatur, eine Raddrehgeschwindigkeit oder eine Reifenlatschlängen-Information, d.h. eine Information über eine Länge der Reifenaufstandsfläche.

Aus der DE 197 37 945 B4 ist bekannt, die Daten von einer Radeinheit in Form von zeitlich beabstandeten Datensendungen zu der Zentraleinheit des Fahrzeuges zu senden, wobei Zeitabstände zwischen den Datensendungen gemäß eines Zufallsalgorithmus variierend festgelegt werden und in jede Datensendung eine Information darüber aufgenommen wird, in welchem Zeitabstand die nächste Datensendung einer Radeinheit zu erwarten ist, so dass durch eine Auswertung der letzteren Information in der Zentraleinheit des Fahrzeuges zeitliche Empfangsfenster festgelegt werden können, in denen Datensendungen empfangen werden können. Da die Zentraleinheit nur dann in einen Datenempfangsmodus geschaltet wird, wenn eine Datensendung von einer Radeinheit zu erwarten ist, lassen sich die Energieressourcen der Zentraleinheit wie auch der einzelnen Radeinheiten schonen.

Aus der US 2005/109094 A1 ist ein Verfahren zur Übertragung von Daten von einer an einem Rad eines Fahrzeuges angeordneten Radeinheit zu einer Zentraleinheit des Fahrzeuges gemäß dem Oberbegriff des Anspruchs 1 bekannt.

Es ist eine Aufgabe der vorliegenden Erfindung, bei einem Verfahren und einer Vorrichtung zur Übertragung von Daten von einer an einem Rad eines Fahrzeuges angeordneten Radeinheit zu einer Zentraleinheit des Fahrzeuges sowohl eine hohe Leistungsfähigkeit der Datenübertragungsverbindung zu gewährleisten als auch einen gewissen Schutz vor Manipulationen der Datenübertragung zu ermöglichen. Ferner ist es eine Aufgabe der vorliegenden Erfindung, ein entsprechendes Computerprogrammprodukt und ein entsprechendes computerlesbares Medium anzugeben.

Gemäß der Erfindung werden diese Aufgaben gelöst durch ein Verfahren nach Anspruch 1, eine Vorrichtung nach Anspruch 10, ein Computerprogrammprodukt nach Anspruch 13 und ein computerlesbares Medium nach Anspruch 14. Vorteilhafte Weiterbildungen der Erfindung sind Gegenstand der abhängigen Ansprüche sowie der nachfolgenden Beschreibung.

Ein erster Aspekt der Erfindung betrifft ein Verfahren zur Übertragung von Daten von einer an einem Rad eines Fahrzeuges angeordneten Radeinheit zu einer Zentraleinheit des Fahrzeuges, aufweisend:
- Senden der Daten in Form von zeitlich beabstandeten Datensendungen von der Radeinheit zu der Zentraleinheit, wobei Sendezeitpunkte der Datensendungen gemäß eines Sendealgorithmus von der Radeinheit festgelegt werden,
- Empfangen der von der Radeinheit gesendeten Datensendungen mittels der Zentraleinheit,
- Auswerten von Empfangszeitpunkten, zu denen die Datensendungen jeweils von der Zentraleinheit empfangen werden, gemäß eines den Sendealgorithmus berücksichtigenden Auswertealgorithmus, und
- Bewerten der Datensendungen anhand eines Ergebnisses der Auswertung der Empfangszeitpunkte.

Das Verfahren ist dadurch gekennzeichnet, dass nach einem jeweiligen Empfang einer Datensendung die Zentraleinheit eine Zeitspanne festlegt und, sollte während dieser Zeitspanne eine Datensendung der betreffenden Radeinheit empfangen werden, diese grundsätzlich als nicht gültig bewertet wird, es sei denn, dem Inhalt dieser Datensendung lässt sich entnehmen, dass die betreffende Radeinheit in einen Alarmbetriebsmodus gewechselt hat, und dass der festgestellte Empfangszeitpunkt kompatibel mit den Bestimmungen des Sendealgorithmus für den Alarmbetriebsmodus ist.

Die Grundidee der Erfindung besteht darin, Datensendungen, insbesondere auch z. B. gefälschte Datensendungen, zwar zu empfangen und bevorzugt sogar jederzeit zu empfangen, diese empfangenen Datensendungen sodann jedoch auf Basis einer Auswertung der Empfangszeitpunkte individuell zu bewerten, beispielswiese jeweils als "gültig" oder "ungültig" zu betrachten, so dass beispielsweise seitens der Zentraleinheit eine zusätzliche Information (Bewertungsergebnis) bereitgestellt wird, welche vorteilhaft insbesondere z. B. zum Aussortieren ungültiger bzw. potentiell gefälschter Datensendungen (vor einer weitergehenden Nutzung des Dateninhalts) verwendet werden kann. Dadurch können in vorteilhafter Weise Manipulationen durch einen Unberechtigten, beispielsweise einen sogenannten Hacker erschwert werden, indem die Datenübertragung nicht einfach dadurch manipulieren kann, dass eine Datensendung abgefangen und ausgewertet wird und eine inhaltlich verfälschte Datensendung (z. B. einen sehr geringen Reifendruck angebend) zu einem beliebigen Zeitpunkt ausgesendet und anschließend von der Zentraleinheit empfangen wird.

Im Gegensatz zu dem Verfahren gemäß dem oben genannten Aspekt der Erfindung befindet sich die Zentraleinheit gemäß der DE 197 37 945 B4 nur zeitweise in einem Datenempfangsmodus, so dass zu unpassender Zeit ausgesendete Datensendungen überhaupt nicht empfangen werden. Dadurch kann jedoch auch die eigentlich gewollte Leistungsfähigkeit der Datenübertragungsverbindung beeinträchtigt werden, insbesondere da in denjenigen Zeiträumen, in denen die Zentraleinheit sich nicht in dem Datenempfangsmodus befindet, überhaupt keine Datensendungen übertragen werden können.

Mittels des Verfahrens gemäß dem oben genannten Aspekt der Erfindung kann eine derartige Beeinträchtigung der Leistungsfähigkeit der Datenübertragungsverbindung in vorteilhafter Weise vermieden werden, wobei gleichzeitig ein gewisser Schutz vor Manipulationen der Datenübertragung gegeben ist.

Für die Implementierung ist es dabei wesentlich, dass ein bei der Auswertung der Empfangszeitpunkte verwendeter Auswertealgorithmus einen seitens der betreffenden Radeinheit zur Festlegung der Sendezeitpunkte verwendeten Sendealgorithmus berücksichtigt. Für diese Berücksichtigung gibt es vielfältige Möglichkeiten. Wesentlich ist hierbei eine Auswertung dahingehend, ob ein Empfangszeitpunkt der betreffenden Datensendung, gegebenenfalls unter Mitberücksichtigung des Dateninhalts dieser und/oder wenigstens einer vorausgegangen empfangenen Datensendung, kompatibel mit dem Sendealgorithmus ist. Beispielhafte Ausführungen dieser Berücksichtigung werden weiter unten noch beschrieben.

Mit der Erfindung ist, wie bereits erläutert, vorteilhaft eine hohe Leistungsfähigkeit der Datenübertragungsverbindung erzielbar, insbesondere wenn im Verlauf des Verfahrens, zeitlich betrachtet, für einen überwiegenden Teil der Zeit Datensendungen empfangen, ausgewertet und bewertet werden. Beispielsweise kann vorgesehen sein, dass während des Verfahrens bzw. im Betrieb der Vorrichtung jederzeit Datensendungen in dieser Weise empfangen und verarbeitet werden können.

Selbst in dem Fall, dass jederzeit Datensendungen empfangen und verarbeitet werden können, kann mit der Erfindung vorteilhaft im Wesentlichen die gleiche Manipulationssicherheit, d. h. eine Verringerung der Gefahr einer Akzeptanz illegaler Weise von einem Dritten ausgesendeter Datensendungen, erzielt werden, wie bei der DE 197 37 945 B4. Nämlich können zu einem unpassenden Zeitpunkt empfangene Datensendungen entsprechend bewertet werden.

Im Hinblick darauf, dass die Erfindung für sicherheitskritische Anwendungen im Betrieb von Fahrzeugen, wie beispielsweise für eine Reifendruckkontrolle eingesetzt werden kann, besteht ein besonderer Vorteil der Erfindung insbesondere darin, dass in jeglicher Art von Notsituation wichtige Daten auch sofort zur Zentraleinheit übertragen werden können. Hierfür ist es zweckmäßig, wenn der Sendealgorithmus eine solche Notsituation (z. B. plötzlicher übermäßiger Reifendruckverlust) berücksichtigt und in dieser Situation ein Senden auch zu einem Zeitpunkt gestattet, der in einer Normalbetriebssituation nicht vorgesehen ist (insbesondere ein sofortiges Senden).

In einer Ausführungsform ist vorgesehen, dass die Radeinheit zwischen mehreren Betriebsmodi umschaltbar ist und der Sendealgorithmus beinhaltet, dass eine Festlegung eines Zeitabstands zwischen aufeinanderfolgenden der Datensendungen in Abhängigkeit von einem aktuellen Betriebsmodus der Radeinheit erfolgt.

Insbesondere kann die Radeinheit z. B. zumindest zwischen (wenigstens) einem Ruhemodus und (wenigstens) einem Normalbetriebsmodus umschaltbar sein, wobei im Ruhemodus durch den Sendealgorithmus relativ große Zeitabstände zwischen den Datensendungen (z. B. in der Größenordnung von etwa einer Stunde) oder sogar ein gänzlicher Verzicht auf Datensendungen vorgesehen sein kann, wohingegen im Normalbetriebsmodus durch den Sendealgorithmus eine Festlegung von demgegenüber kleineren Zeitabständen (z. B. in der Größenordnung von etwa einer Minute, oder weniger) vorgesehen sein kann.

Die Umschaltung zwischen den beiden genannten Betriebsmodi kann z. B. basierend auf dem Ergebnis einer von der betreffenden Radeinheit regelmäßig in kurzen Zeitabständen oder laufend durchgeführten Detektion eines Drehbewegungszustandes des betreffenden Rades (an dem die Radeinheit angeordnet ist) derart erfolgen, dass bei einem Stillstand des Rades oder z. B. einem mindestens über eine vorbestimmte Zeitdauer anhaltenden Stillstand des Rades die Radeinheit in einen Ruhemodus geschaltet wird, wohingegen bei Detektion einer Raddrehung bzw. z. B. einer über eine vorbestimmte Zeitdauer anhaltenden Raddrehung die Radeinheit in einen Normalbetriebsmodus geschaltet wird.

In einer Weiterbildung dieser Ausführungsform wird der Zeitabstand zwischen aufeinanderfolgenden der Datensendungen durch den Sendealgorithmus nicht nur in Abhängigkeit von dem aktuellen Betriebsmodus festgelegt, sondern unter Berücksichtigung wenigstens eines weiteren mittels der Radeinheit ermittelten Radbetriebsparameters wie z. B. einer Drehwinkelstellung des Rades endgültig festgelegt. Damit kann z. B. eine Ausführung realisiert werden, bei welcher Datensendungen jeweils z. B. bei einer vorbestimmten Drehwinkelstellung und/oder bei von Datensendung zu Datensendung variierender Drehwinkelstellung gesendet werden. Der Begriff "Radbetriebsparameter" soll hier allgemein jede an dem betreffenden Rad erfassbare und entsprechend einem Betrieb des Rades variierbare physikalische Größe umfassen.

Bevorzugt ist bei dieser Ausführungsform jedoch, dass der aktuelle Betriebsmodus, zumindest wenn es der bzw. ein Ruhemodus oder der bzw. ein Normalbetriebsmodus ist, den Zeitabstand zwischen aufeinanderfolgenden Datensendungen zumindest mitbestimmt.

Diese Mitbestimmung (Festlegung) des Zeitabstands kann insbesondere z. B. so vorgesehen sein, dass jeder Zeitabstand (gegebenenfalls auch unter Mitberücksichtigung eines weiteren Bestimmungsparameters neben dem Betriebsmodus) für einen Normalbetriebsmodus in einem Bereich liegt, der nicht mit einem Bereich überlappt, in welchem sämtliche für einen Ruhemodus möglichen Zeitabstände liegen.

Beispielsweise kann der momentane Betriebsmodus für eine Grundeinstellung des betreffenden Zeitabstands verwendet werden, z. B. auf einen Wert zwischen zehn Minuten und vier Stunden in einem Ruhemodus bzw. einen Wert zwischen einer Sekunde und 100 Sekunden in einem Normalbetriebsmodus, wohingegen basierend auf wenigstens einem Radbetriebsparameter (oder einer daraus abgeleiteten Größe) eine weitergehende Zusatzeinstellung erfolgt. Diese Zusatzeinstellung kann z. B. im Rahmen der Festlegung des Zeitabstandes durch eine Addition oder Subtraktion einer Zusatzzeit implementiert sein, oder aber erst nach Ablauf der von der Grundeinstellung vorgegebenen Zeitspanne festgelegt werden, z. B. in Form einer Verzögerung der Datensendung bis zu einem Zeitpunkt, zu dem das Rad eine durch den Sendealgorithmus vorbestimmte Drehwinkelstellung erreicht hat.

In einer Ausführungsform ist zusätzlich zu dem (wenigstens einen) Normalbetriebsmodus (wenigstens) ein Alarmbetriebsmodus vorgesehen, um damit vorteilhaft auch außerhalb eines für den Ruhemodus und den Normalbetriebsmodus vorgesehenen Zeitabstandschemas Datensendungen bei dringendem Bedarf wie z. B. in einer Notsituation (z. B. Detektion eines raschen und übermäßigen Reifendruckabfalls) möglichst zeitnah senden zu können.

In einer Ausführungsform ist vorgesehen, dass die Datensendungen jeweils eine Information über den aktuellen Betriebsmodus der Radeinheit und/oder eine Information über den Zeitabstand zwischen aufeinanderfolgenden der Datensendungen enthalten.

Die Information über den aktuellen Betriebsmodus der Radeinheit kann beispielsweise durch die Zentraleinheit aus den jeweils empfangenen Datensendungen extrahiert und dann vorteilhaft beim Auswerten der Empfangszeitpunkte genutzt werden.

Hierzu ein Beispiel: Wenn die Zentraleinheit Kenntnis darüber besitzt, dass die Radeinheit sich in einem Ruhemodus oder einem Normalbetriebsmodus befindet, sei es anhand einer Auswertung der Empfangszeitpunkte vorangegangen empfangener Datensendungen und/oder anhand der in der Datensendung enthaltenen Information über den aktuellen Betriebsmodus, so kann eine darauffolgend zu einem passenden (d. h. mit dem Sendealgorithmus kompatiblen) Zeitpunkt empfangene Datensendung als gültig bewertet werden. Demgegenüber können entsprechend dem zuletzt festgestellten Betriebsmodus zu unpassendem Zeitpunkt empfangene Datensendungen z. B. daraufhin ausgewertet werden, ob vielleicht ein Wechsel des Betriebsmodus stattgefunden hat, welcher den betreffenden Empfangszeitpunkt wieder plausibel (kompatibel mit dem Sendealgorithmus) erscheinen lässt. Für letztere Auswertung kann die in der Datensendung enthaltene Betriebsmodusinformation genutzt werden.

Eine Erkennung einer in einer Datensendung enthaltenen Information "Alarmbetriebsmodus" kann im Rahmen der Auswertung und Bewertung dieser Datensendung z. B. zu einer Bewertung der Datensendung als gültig führen, wenn der Empfangszeitpunkt innerhalb eines Zeitraumes liegt, welchen der Sendealgorithmus für das Senden im Alarmbetriebsmodus zulässt. Im Extremfall kann der Sendalgorithmus vorsehen, dass Datensendungen im Alarmbetriebsmodus jederzeit erfolgen können.

Die beispielsweise seitens der Zentraleinheit erfolgende Nutzung einer Kenntnis über den aktuellen Betriebsmodus in Verbindung mit der Kenntnis über die in diesem Betriebsmodus zulässigen Sendezeitpunkte bzw. Zeitabstände zwischen aufeinanderfolgenden Datensendungen ist ein Beispiel einer Berücksichtigung des Sendealgorithmus der Radeinheit durch den Auswertealgorithmus der Zentraleinheit.

Das gleiche gilt auch für eine beispielsweise seitens der Zentraleinheit erfolgende Nutzung einer aus dem Inhalt einer Datensendung selbst entnommenen Information über den nächsten Sendezeitpunkt bzw. Zeitabstand der nächsten Datensendung.

Um bei Vorhandensein eines Alarmbetriebsmodus z. B. mit der vom Sendealgorithmus hierfür vorgesehenen Möglichkeit eines Sendens zu beliebigem Zeitpunkt einem Hacker eine Manipulation durch Senden einer gefälschten Datensendung mit Angabe dieses Betriebsmodus zu erschweren, kann vorgesehen sein, dass seitens der Zentraleinheit nach erstmaligem Empfang einer solchen Datensendung nicht sofort eine entsprechende Nutzung bzw. Initiierung entsprechender Maßnahmen erfolgt, sondern eine gemäß des Sendealgorithmus definierte, wenigstens einmalige Bestätigung der Datensendung durch (wenigstens) eine nachfolgende weitere Datensendung abgewartet wird.

Im Hinblick auf eine Implementierung des Merkmals, wonach der Auswertealgorithmus beispielsweise der Zentraleinheit den Sendealgorithmus der Radeinheit berücksichtigt, ist in einer Weiterbildung vorgesehen, dass das Auswerten der Empfangszeitpunkte ein Festlegen von zeitlichen Empfangsfenstern hinsichtlich der Empfangszeitpunkte und ein Vergleichen der tatsächlichen Empfangszeitpunkte mit den zeitlichen Empfangsfenstern umfasst.

Da der Auswertealgorithmus gewissermaßen Kenntnis über den Sendealgorithmus bzw. dessen Funktionsweise besitzt, können auf dieser Basis die zeitlichen Empfangsfenster als Zeiträume festgelegt werden, in denen als gültig zu bewertende Datensendungen zu erwarten sind. Insbesondere kann z. B. unmittelbar nach Empfang oder kurze Zeit nach Empfang einer für die Radeinheit gültigen Datensendung ein Empfangsfenster geschlossen werden, so dass in dieser Situation empfangene Datensendungen grundsätzlich als ungültig zu bewerten sind (es sei denn, dass es sich z. B. um eine im Alarmbetriebsmodus gesendete Datensendung handelt, für die ein Senden in diesem Zeitraum zugelassen ist).

Des Weiteren kann vorgesehen sein, dass beispielsweise seitens der Zentraleinheit ein zeitliches Empfangsfenster vor einem Zeitpunkt geöffnet wird, zu dem nach Empfang einer gültigen Datensendung von der betreffenden Radeinheit die nächste Datensendung von dieser Radeinheit zu erwarten ist. Diese Erwartung kann wie oben bereits erläutert z. B. auf einer Kenntnis des aktuellen Betriebsmodus und/oder eines aktuell vorgesehenen Sendezeitabstandes der Radeinheit beruhen. Eine nach dieser Öffnung des Empfangsfensters, wobei diese Öffnung bevorzugt kurz vor dem genannten erwarteten Zeitpunkt erfolgt, eingehende Datensendung kann dann grundsätzlich als gültig bewertet werden.

Der Begriff "kurz" soll in diesem Zusammenhang insbesondere eine Zeitspanne umfassen, die kleiner als 20 %, insbesondere kleiner als 10 %, des nach Empfang einer Datensendung für eine nächste Datensendung zu erwartenden Zeitabstandes ist.

In einer Ausführungsform ist vorgesehen, dass das Empfangen der Datensendungen der Radeinheit unter Verwendung einer Signalempfangseinrichtung der Zentraleinheit erfolgt, die ferner zum Empfangen von Datensendungen wenigstens einer weiteren Sendeeinrichtung ausgebildet ist, die von der Radeinheit verschieden ist.

Abgesehen von dem Fall einer Verwendung der Signalempfangseinrichtung (z. B. Funkempfangseinrichtung) zum Empfangen von Datensendungen weiterer Radeinheiten, die an weiteren Rädern desselben Fahrzeuges angeordnet sind, ist hier insbesondere auch an eine Verwendung der Signalempfangseinrichtung zum Empfangen von Datensendungen eines elektronischen Schlüssels einer Schließanlage (z. B. einer Zentralverriegelung) des Fahrzeuges und/oder sonstiger Datensendungsquellen zu denken, die bei einer Nutzung des Fahrzeuges betriebsmäßig einsetzbar sind (z. B. für eine Kommunikation mit von dem Fahrer des Fahrzeuges mitgeführten mobilen Endgeräten, etc.).

In einer Ausführungsform ist vorgesehen, dass das Auswerten der Empfangszeitpunkte eine Adaption von Ganggeschwindigkeiten eines in der Radeinheit zur Festlegung der Sendezeitpunkte verwendeten (ersten) Zeitgebers und/oder eines in der Zentraleinheit bei der Auswertung der Empfangszeitpunkte verwendeten (zweiten) Zeitgebers umfasst.

Mit dieser Maßnahme kann vorteilhaft ein z. B. toleranzbedingt vorliegender Unterschied in der Ganggeschwindigkeit einerseits der in der Radeinheit und andererseits in der Zentraleinheit verwendeten Zeitgeber (Uhren) kompensiert werden. Dies ist insbesondere dann von Bedeutung, wenn beim Auswerten der Empfangszeitpunkte wie erwähnt ein Festlegen von zeitlichen Empfangsfenstern erfolgt und diese Empfangsfenster (bzw. zumindest der Zeitpunkt, zu dem ein Empfangsfenster geöffnet wird) relativ eng um bzw. relativ nahe an die für eine jeweils nächste Datensendung zu erwartenden Zeitpunkte gelegt werden sollen.

Hierzu kann z. B. vorgesehen sein, dass in der Zentraleinheit anhand eines Vergleiches der Zeitabstände, zu denen in der Zentraleinheit Datensendungen eingehen, und der Zeitabstände, welche hierfür in der Zentraleinheit (durch die Berücksichtigung des Sendealgorithmus) selbst ermittelt wurden, ein Korrekturwert berechnet und abgespeichert wird, der es erlaubt, eine von der Radeinheit festgelegte Zeitspanne (z. B. Zeitabstand zur nächsten Datensendung) in eine in der Zentraleinheit gemessene Zeitspanne (z. B. bei der Festlegung eines Empfangsfensters herangezogener Zeitabstand) umzurechnen.

Was die Festlegung der zeitlichen Empfangsfenster anbelangt, so ist gemäß einer Ausführungsform vorgesehen, dass beispielsweise in der Zentraleinheit nach Empfang und Auswertung einer Datensendung durch den Auswertealgorithmus zunächst nur festgelegt wird, dass das vorangegangene Empfangsfenster geschlossen wird und ein nächstes Empfangsfenster kurz vor dem zu erwartenden Zeitpunkt der nächsten Datensendung geöffnet wird. Dabei kann vorgesehen sein, dass wenn die erwartete Datensendung (etwa zum erwarteten Zeitpunkt) nicht empfangen wird, das geöffnete Empfangsfenster solange geöffnet bleibt, bis von der betreffenden Radeinheit eine neue Datensendung tatsächlich empfangen wird.

Abweichend davon soll nicht ausgeschlossen sein, dass bereits zum Zeitpunkt des Empfangs einer Datensendung jeweils das für die nächste Datensendung vorgesehene Empfangsfenster vollständig, d. h. Beginn und Ende dieses Empfangsfenster, festgelegt wird. Die Breite dieses Empfangsfensters kann z. B. mindestens 1 %, insbesondere mindestens 2 %, und/oder höchstens 20 %, insbesondere höchstens 10 %, der Zeitspanne zwischen dem Empfang der Datensendung und dem erwarteten Zeitpunkt des Empfangs der nächsten Datensendung betragen.

In einer Ausführungsform ist vorgesehen, dass das Bewerten einer jeweiligen empfangenen Datensendung eine Plausibilisierung dahingehend umfasst, ob in dieser Datensendung enthaltene Daten einer weitergehenden Nutzung zuzuführen sind.

Im einfachsten Fall wird jede Datensendung wie bereits erwähnt entweder als "gültig" (plausibel) oder als "ungültig" (unplausibel) bewertet und es werden lediglich die als gültig bewerteten Datensendungen einer weitergehenden Nutzung zugeführt. Im Rahmen der Erfindung nicht ausgeschlossen soll jedoch auch eine detailliertere Bewertung sein (d. h. mit mehr als zwei möglichen Bewertungsergebnissen), auf deren Basis sodann eine Auswahl unter mehreren möglichen weitergehenden Nutzungen erfolgt, um die Datensendung der bzw. den jeweils ausgewählten Nutzung(en) zuzuführen.

Das Auswerten der Empfangszeitpunkte und/oder das Bewerten der Datensendungen kann insbesondere mittels der Zentraleinheit erfolgen. Dadurch kann die Zahl der für die Durchführung des Verfahrens benötigten Komponenten in vorteilhafter Weise gering gehalten werden.

Es ist in einer weiteren Ausführungsform jedoch auch zusätzlich oder alternativ möglich, dass das Auswerten der Empfangszeitpunkte und/oder das Bewerten der Datensendungen mittels einer von der Zentraleinheit verschiedenen Einheit, welche mit der Zentraleinheit über eine Datenverbindung gekoppelt ist, erfolgt. Dadurch kann die Zentraleinheit von der gegebenenfalls rechenintensiven Auswertung bzw. Bewertung entlastet werden. Die von der Zentraleinheit verschiedene Einheit kann dabei Bestandteil des Fahrzeugs sein oder mit dem Fahrzeug über eine Datenverbindung gekoppelt sein. Beispielsweise kann es sich bei der von der Zentraleinheit verschiedenen Einheit um ein mobiles Endgerät eines Fahrzeugnutzers handeln, insbesondere um ein mit dem Fahrzeug über eine Datenverbindung gekoppeltes Mobiltelefon.

Ein weiterer Aspekt der Erfindung betrifft eine Vorrichtung zur Übertragung von Daten von einer an einem Rad eines Fahrzeuges angeordneten Radeinheit zu einer Zentraleinheit des Fahrzeuges, aufweisend:
- eine Radeinheit ausgebildet zur Anordnung an einem Rad eines Fahrzeuges, aufweisend Mittel zum Senden von Daten in Form von zeitlich beabstandeten Datensendungen von der Radeinheit zu der Zentraleinheit, wobei Sendezeitpunkte der Datensendungen gemäß eines Sendealgorithmus von der Radeinheit festlegbar sind, wobei die Radeinheit zwischen mehreren Betriebsmodi umschaltbar ist und wobei die Datensendungen jeweils eine Information über den aktuellen Betriebsmodus der Radeinheit enthalten, und
- eine Zentraleinheit ausgebildet zur Anordnung an dem Fahrzeug, aufweisend Mittel zum Empfangen der von der Radeinheit gesendeten Datensendungen.

Die Vorrichtung weist ferner auf:
- Mittel zum Auswerten von Empfangszeitpunkten, zu denen die Datensendungen jeweils von der Zentraleinheit empfangen werden, gemäß eines den Sendealgorithmus berücksichtigenden Auswertealgorithmus, wobei das Auswerten der Empfangszeitpunkte ein Festlegen von zeitlichen Empfangsfenstern hinsichtlich der Empfangszeitpunkte und ein Vergleichen der tatsächlichen Empfangszeitpunkte mit den zeitlichen Empfangsfenstern umfasst, und
- Mittel zum Bewerten der Datensendungen anhand eines Ergebnisses der Auswertung der Empfangszeitpunkte, wobei außerhalb eines Empfangsfensters empfangene Datensendungen grundsätzlich als ungültig bewertet werden, es sei denn, dass es sich um eine in einem Alarmbetriebsmodus der Radeinheit gesendete Datensendung handelt und der Empfangszeitpunkt der Datensendung innerhalb eines Zeitraumes liegt, welchen der Sendealgorithmus für das Senden in dem Alarmbetriebsmodus zulässt.

Die obenstehend für das Verfahren gemäß dem ersten Aspekt der Erfindung beschriebenen Ausführungen und Weiterbildungen können in analoger Weise auch als Ausführungen und Weiterbildungen der Vorrichtung gemäß dem weiteren Aspekt der Erfindung vorgesehen sein und umgekehrt.

In einer Ausführungsform weist die Zentraleinheit die Mittel zum Auswerten von Empfangszeitpunkten und/oder die Mittel zum Bewerten der Datensendungen auf. Dadurch kann die Zahl der Komponenten der Vorrichtung in vorteilhafter Weise gering gehalten werden.

In einer weiteren Ausführungsform sind die Mittel zum Auswerten von Empfangszeitpunkten und/oder die Mittel zum Bewerten der Datensendungen mit der Zentraleinheit über eine Datenverbindung gekoppelt. Dadurch kann die Zentraleinheit von der gegebenenfalls rechenintensiven Auswertung bzw. Bewertung entlastet werden. Die Mittel zum Auswerten von Empfangszeitpunkten und/oder die Mittel zum Bewerten der Datensendungen können dabei Bestandteil des Fahrzeugs sein oder mit dem Fahrzeug über eine Datenverbindung gekoppelt sein. Beispielsweise können die Mittel zum Auswerten von Empfangszeitpunkten und/oder die Mittel zum Bewerten der Datensendungen Bestandteil eines mobilen Endgeräts eines Fahrzeugnutzers sein, insbesondere eines mit dem Fahrzeug über eine Datenverbindung gekoppelten Mobiltelefons.

Was die Ausgestaltung der Radeinheit anbelangt, so kann diese z. B. zur Anordnung an einer Innenseite einer Lauffläche eines Reifens an dem betreffenden Rad vorgesehen sein und z. B. (wenigstens) eine Sensoreinrichtung wie z. B. einen Drucksensor (im Falle eines Reifendruckkontrollsystems) und eine Sendeeinrichtung (insbesondere eine Funksendeeinrichtung) aufweisen. Zweckmäßigerweise umfasst die z. B. batteriebetriebene Radeinheit ferner eine programmgesteuerte Rechnereinrichtung (z. B. einen Mikrocontroller) zur Verarbeitung des (wenigstens einen) Sensorsignals und zur Erzeugung der zu übertragenden Daten bzw. Datensendungen (z. B. digital codierte Datentelegramme). Insbesondere kann die Radeinheit auch einen Beschleunigungs- und/oder Schocksensor und/oder weitere Sensoreinrichtungen (z. B. einen Temperatursensor) aufweisen, deren Sensorsignale ebenfalls von der genannten Rechnereinrichtung bei der Erzeugung der zu übertragenden Daten berücksichtigt werden können.

Bei einem mehrrädrigen Fahrzeug, z. B. mit drei Rädern oder z. B. mit vier Rädern (z. B. einem Personenkraftwagen) ist eine eigene Radeinheit der hier beschriebenen Art bevorzugt an jedem dieser Räder angeordnet. Die von den einzelnen Radeinheiten gesendeten Datensendungen beinhalten bevorzugt jeweils einen die Radeinheit identifizierenden Identifikationscode. Die von verschiedenen Radeinheiten stammenden Datensendungen werden bevorzugt durch eine hierfür gemeinsam genutzte Zentraleinheit des Fahrzeuges empfangen, ausgewertet und bewertet.

Die Übertragung der Datensendungen erfolgt bevorzugt über eine digitale Funkverbindungsstrecke zwischen der (wenigstens einen) Radeinheit und der Zentraleinheit, wofür die Radeinheit mit einer entsprechenden Funksendeeinrichtung und die Zentraleinheit mit einer entsprechenden Funkempfangseinrichtung ausgestattet sind.

Die Zentraleinheit bzw. die Mittel zum Auswerten von Empfangszeitpunkten und/oder die Mittel zum Bewerten der Datensendungen sind bevorzugt als programmgesteuerte Datenverarbeitungseinrichtung (z. B. Mikrocontroller) ausgebildet bzw. umfassen eine solche Datenverarbeitungseinrichtung, um die Empfangszeitpunkte der empfangenen Datensendungen auszuwerten und anhand eines Ergebnisses dieser Auswertung die jeweiligen Datensendungen zu bewerten.

Darüber hinaus ist die Zentraleinheit mit Mitteln zum Empfangen der Datensendungen ausgestattet, beispielsweise mit einer hierfür geeigneten Funkempfangseinrichtung.

Gemäß eines weiteren Aspekts der Erfindung ist ein Computerprogrammprodukt umfassend einen Programmcode vorgesehen, der auf einer Datenverarbeitungseinrichtung (z. B. der Radeinheit und der Zentraleinheit) ausgeführt ein Datenübertragungsverfahren der hier beschriebenen Art durchführt.

Ein weiterer Aspekt der Erfindung betrifft ein computerlesbares Medium mit einem derartigen Computerprogrammprodukt.

Die Erfindung wird nachfolgend anhand von Ausführungsbeispielen mit Bezug auf die beigefügten Zeichnungen weiter beschrieben. Es stellen dar:
- Fig. 1: eine schematische Draufsicht eines Fahrzeuges mit einer Vorrichtung zu Datenübertragung gemäß eines Ausführungsbeispiels,
- Fig. 2: ein Ablaufdiagramm eines Verfahrens zur Datenübertragung gemäß eines Ausführungsbeispiels,
- Fig. 3: eine beispielhafte Darstellung der von einer Datensendung beinhalteten Daten, und
- Fig. 4: eine beispielhafte Darstellung einer zeitlichen Folge von Datensendungen.

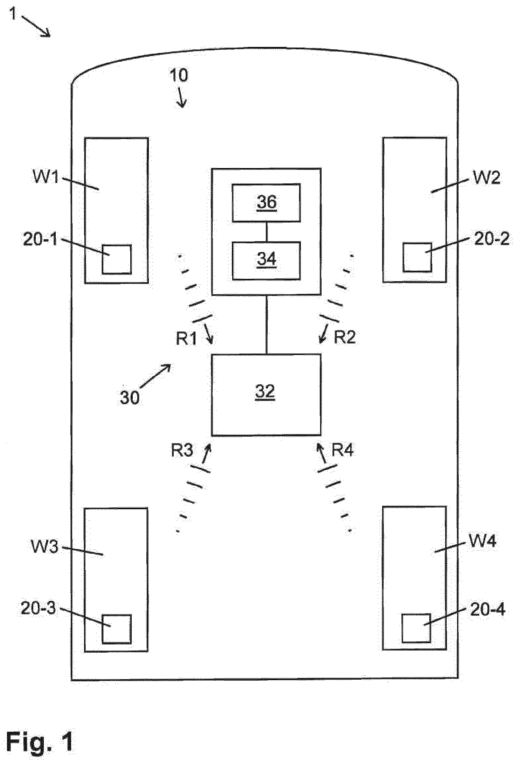

Fig. 1 zeigt ein Fahrzeug 1, hier ein Kraftfahrzeug (z. B. einen Personenkraftwagen) mit vier Rädern W1 bis W4.

Die Räder W1 bis W4 sind jeweils mit einem Reifen und einer z. B. an einer Innenseite der betreffenden Reifenlauffläche angeordneten sogenannten elektronischen Radeinheit 20-1 bis 20-4 ausgestattet, um wenigstens einen Radbetriebsparameter wie hier insbesondere zumindest den Reifeninnendruck zu erfassen und entsprechende Sensordaten in Form von zeitlich beabstandeten Datensendungen R1 bis R4 drahtlos (über eine Funkverbindung) an eine fahrzeugseitige, d. h. im Fahrzeug 1 angeordnete Funkempfangseinheit 32 zu senden.

Die Sendezeitpunkte, zu denen beispielsweise die Datensendungen R1 erfolgen, werden hierbei gemäß eines in der Radeinheit 20-1 ablaufenden Sendealgorithmus festgelegt. Analoges gilt für die Festlegung der Sendezeitpunkte der Datensendungen R2, R3 und R4, die durch einen in der gezeigten Ausführungsform jeweils identisch arbeitenden Sendealgorithmus der Radeinheiten 20-2, 20-3 bzw. 20-4 festgelegt werden.

Die von der Funkempfangseinheit 32 empfangenen Datensendungen R1 bis R4 werden, z. B. über einen digitalen Datenbus (z. B. CAN-Bus, LIN-Bus etc.) an eine Auswertungs- und Bewertungseinrichtung kommuniziert, die im dargestellten Beispiel durch eine Recheneinheit (Mikrocontroller) 34 und eine zugeordnete Speichereinheit 36 gebildet wird.

Die Komponenten 32, 34 und 36 bilden somit eine in dem Fahrzeug 1 angeordnete Zentraleinheit 30, welche wie beschrieben die von jeder der Radeinheiten 20-1 bis 20-4 gesendeten Datensendungen R1, R2, R3 bzw. R4 empfängt, um sodann gesondert für jede der Radeinheiten 20-1 bis 20-4 eine Auswertung der Empfangszeitpunkte, zu denen die betreffenden Datensendungen R1, R2, R3 bzw. R4 jeweils von der Zentraleinheit 30 empfangen werden, gemäß eines in der Recheneinheit 34 ablaufenden Auswertealgorithmus auszuwerten, und schließlich anhand eines Ergebnisses dieser Auswertung zu bewerten. Hierfür verwendeter Programmcode ist in der Speichereinheit 36 abgelegt.

Die Recheneinheit 34 sowie die Speichereinheit 36 bilden somit in der gezeigten Ausführungsform Mittel zum Auswerten von Empfangszeitpunkten, zu denen die Datensendungen R1, R2, R3 bzw. R4 jeweils von der Zentraleinheit 30 empfangen werden, gemäß eines den Sendealgorithmus berücksichtigenden Auswertealgorithmus. Ferner bilden die Recheneinheit 34 sowie die Speichereinheit 36 in der gezeigten Ausführungsform Mittel zum Bewerten der Datensendungen R1, R2, R3 bzw. R4 anhand eines Ergebnisses der Auswertung der Empfangszeitpunkte.

In der gezeigten Ausführungsform weist somit die Zentraleinheit 30 die Mittel zum Auswerten von Empfangszeitpunkten und die Mittel zum Bewerten der Datensendungen R1, R2, R3 bzw. R4 auf. In einer weiteren Ausführungsform sind die Mittel zum Auswerten von Empfangszeitpunkten und/oder die Mittel zum Bewerten der Datensendungen R1, R2, R3 bzw. R4 mit der Zentraleinheit 30 über eine Datenverbindung gekoppelt. Die Mittel zum Auswerten von Empfangszeitpunkten und/oder die Mittel zum Bewerten der Datensendungen können dabei Bestandteil des Fahrzeugs 1 sein oder mit dem Fahrzeug 1 über eine Datenverbindung gekoppelt sein. Beispielsweise können die Mittel zum Auswerten von Empfangszeitpunkten und/oder die Mittel zum Bewerten der Datensendungen Bestandteil eines mobilen Endgeräts (nicht gezeigt) eines Fahrzeugnutzers sein, insbesondere eines mit dem Fahrzeug 1 über eine Datenverbindung gekoppelten Mobiltelefons (nicht gezeigt).

Die Komponenten 20-1 bis 20-4 und die Zentraleinheit 30 bilden in der gezeigten Ausführungsform eine Vorrichtung 10 zur Übertragung von Daten von den an den Rädern W1 bis W4 des Fahrzeuges 1 angeordneten Radeinheiten 20-1 bis 20-4 zu der Zentraleinheit 30 des Fahrzeuges 1.

Die seitens der Zentraleinheit 30 durchgeführte Auswertung umfasst in diesem Beispiel ein Festlegen von zeitlichen Empfangsfenstern hinsichtlich der Empfangszeitpunkte und einen Vergleich der tatsächlichen Empfangszeitpunkte mit den zeitlichen Empfangsfenstern, d. h. eine Auswertung dahingehend, ob ein betreffender Empfangszeitpunkt innerhalb oder außerhalb des betreffenden Empfangsfensters liegt.

Anhand des entsprechenden Ergebnisses dieser Auswertung wird jede empfangene Datensendung von der Recheneinheit 34 als gültig oder als ungültig bewertet.

Bei der in der gezeigten Ausführungsform seitens der Zentraleinheit 30 durchgeführten Festlegung der zeitlichen Empfangsfenster berücksichtigt der Auswertealgorithmus den in den einzelnen Radeinheiten 20-1 bis 20-4 ablaufenden Sendealgorithmus.

Beispielsweise erfolgt nach Empfang einer als gültige bewerteten Datensendung von einer bestimmten der Radeinheiten 20-1 bis 20-4 die Festlegung einer darauffolgenden Zeitspanne, innerhalb derer der Empfang einer nächsten Datensendung derselben Radeinheit unplausibel erscheint. Mit anderen Worten wird für diese Zeitspanne ein geschlossenes Empfangsfenster für die betreffende Radeinheit festgelegt.

Für die Ermittlung einer solchen Zeitspanne kann die Zentraleinheit 30 z. B. auf das Ergebnis der Auswertung vorangegangener Empfangszeitpunkte zurückgreifen und in Kenntnis des Sendealgorithmus einen entsprechenden Rückschluss auf den zu erwartenden nächsten Zeitpunkt einer Datensendung derselben Radeinheit ziehen.

Alternativ oder zusätzlich können gegebenenfalls auch in den vorangegangenen Datensendungen der betreffenden Radeinheit selbst enthaltene Informationen über einen aktuellen Betriebsmodus und/oder über den Zeitabstand zwischen aufeinanderfolgenden Datensendungen genutzt werden.

Der in jeder der Radeinheiten 20-1 bis 20-4 ablaufende Sendealgorithmus sieht in dem dargestellten Beispiel einen Ruhemodus (bei abgestelltem, z. B. geparktem Fahrzeug) und einen Normalbetriebsmodus (während der Fahrt der Fahrzeuges) vor, wobei durch den Sendealgorithmus der Zeitabstand zwischen aufeinanderfolgenden Datensendungen in Abhängigkeit von dem aktuellen Betriebsmodus (zumindest näherungsweise) festgelegt wird.

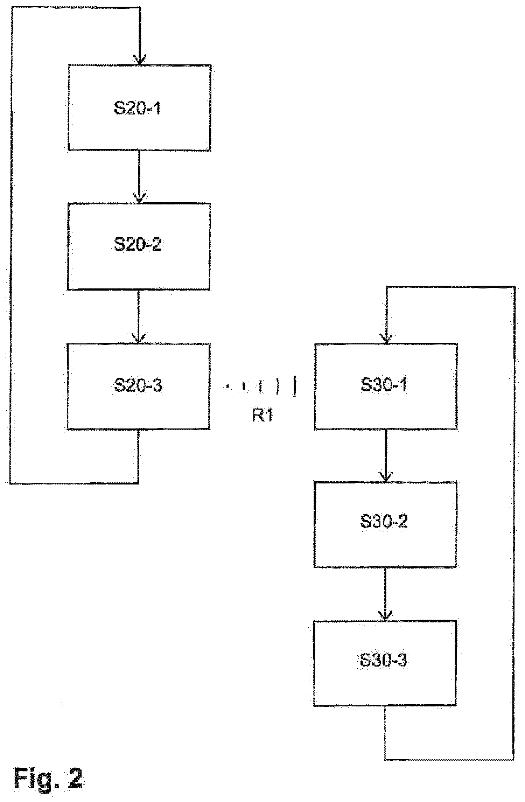

Fig. 2 veranschaulicht wesentliche Schritte des mittels der Datenübertragungsvorrichtung 10 durchgeführten Datenübertragungsverfahrens. Im linken Teil von Fig. 2 sind Schritte dargestellt, die von einer der Radeinheiten 20-1 bis 20-4 durchgeführt werden, wohingegen im rechten Teil von Fig. 2 Schritte dargestellt sind, die in der gezeigten Ausführungsform durch die Zentraleinheit 30 durchgeführt werden.

Seitens der betreffenden Radeinheit werden in einem Schritt S20-1 zu übertragende Daten erzeugt, indem Sensorsignale eines oder mehrerer Sensoren dieser Radeinheit programmgesteuert verarbeitet und die Verarbeitungsergebnisse digital codiert werden.

Ein Schritt S20-2 symbolisiert die Durchführung des Sendealgorithmus durch die Radeinheit, bei welchem die Sendezeitpunkte der einzelnen Datensendungen dieser Radeinheit festgelegt werden.

In dem dargestellten Beispiel wird ein Zeitabstand zwischen aufeinanderfolgenden dieser Datensendung in Abhängigkeit von einem aktuellen Betriebsmodus der Radeinheit festgelegt. Diese Festlegung kann z. B. noch ergänzt bzw. verfeinert werden, indem für die einzelnen Datensendungen jeweils berücksichtigt wird, dass diese bei bestimmten bevorzugten Drehwinkelstellungen des betreffenden Rades ausgesendet werden sollten. Eine derartige Feineinstellung ist in diesem Fall eine Teilfunktionalität des Sendealgorithmus. Die Datensendungen können hierbei auch jeweils eine Information betreffend die erwähnte Feineinstellung enthalten.

In einem Schritt S20-3 erfolgt schließlich das Senden einer Datensendung, deren Inhalt und Sendezeitpunkt zuvor durch die Schritte S20-1 und S20-2 bestimmt wurden.

Wie dargestellt wiederholen sich die Schritte S20-1 bis S20-3 solange die Radeinheit in Betrieb ist. Gleichartige Schritte werden in den gegebenenfalls weiteren vorhandenen Radeinheiten in entsprechender Weise durchgeführt.

Seitens der Zentraleinheit 30 des Fahrzeuges 1 wird in einem Schritt S30-1 eine Datensendung empfangen. In Fig. 2 ist beispielhaft der Empfang einer Datensendung R1, also stammend von der Radeinheit 20-1, dargestellt.

In einem Schritt S30-2 werden der Empfangszeitpunkt dieser Datensendung sowie ein oder mehrere Empfangszeitpunkte von unmittelbar vorausgegangen empfangenen Datensendungen durch einen in der gezeigten Ausführungsform in der Zentraleinheit 30 ablaufenden Auswertealgorithmus ausgewertet.

In einem Schritt S30-3 erfolgt schließlich ein Bewerten der aktuell empfangenen Datensendung anhand des Ergebnisses der vorangegangenen Auswertung im Schritt S30-2.

In dem dargestellten Beispiel umfasst das Bewerten eine Plausibilisierung dahingehend, ob in dieser Datensendung (bzw. welche in dieser Datensendung) enthaltenen Daten einer weitergehenden (bzw. welcher weitergehenden) Nutzung zuzuführen sind.

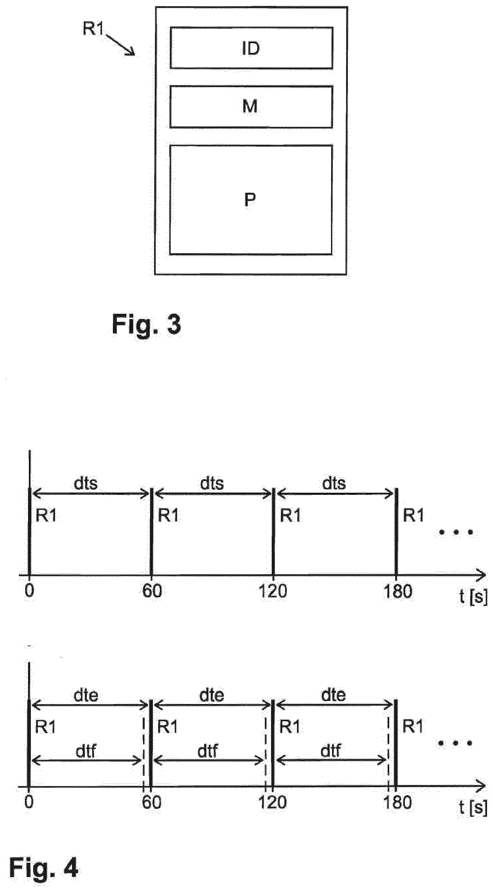

Fig. 3 zeigt beispielhaft eine Datensendung R1, die einen Identifikationscode ID zur eindeutigen Identifikation der betreffend Radeinheit (hier: 20-1), Betriebsmodusdaten M (repräsentativ für einen aktuellen Betriebsmodus der Radeinheit) und Radbetriebsparameterdaten P (repräsentativ für die eigentlichen Nutzdaten der Radeinheit, wie z. B. Daten über den aktuellen Reifeninnendruck, Reifeninnentemperatur, Reifenlatschlänge etc.) enthält.

Fig. 4 veranschaulicht beispielhaft eine zeitliche Folge von Datensendungen R1.

Im oberen Teil von Fig. 4 ist z. B. für einen aktuellen Normalbetriebsmodus ein zeitlich (im Wesentlichen) äquidistantes Senden von Datensendungen R1 dargestellt, die in einem vom Sendealgorithmus festgelegten Zeitabstand dts (hier: dts = 60 s) gesendet werden.

Im unteren Teil von Fig. 4 ist für dieses Beispiel der Empfang der Datensendungen R1 dargestellt, die dementsprechend mit einem gegenseitigen Zeitabstand dte (dte = dts) von der Zentraleinheit 30 empfangen werden. Nach einem jeweiligen Empfang einer Datensendung R1 legt die Zentraleinheit 30 eine Zeitspanne dtf fest (hier: dtf = 94 % x dte). Sollte während dieser Zeitspanne dtf eine Datensendung der betreffenden Radeinheit empfangen werden, so wird diese grundsätzlich als nicht gültig bewertet, es sei denn, dem Inhalt dieser Datensendung lässt sich entnehmen, dass die betreffende Radeinheit in einen Alarmbetriebsmodus gewechselt hat, und dass der festgestellte Empfangszeitpunkt kompatibel mit den Bestimmungen des Sendealgorithmus für den Alarmbetriebsmodus ist.

Wenngleich im dargestellten Beispiel nach Ablauf der Zeitspanne dtf das für die Bewertung verwendete zeitliche Empfangsfenster solange geöffnet bleibt, bis tatsächlich eine nachfolgende Datensendung R1 empfangen wird, kann zusätzlich zu der Zeitspanne dtf auch eine weitere (in Fig. 4 nicht dargestellte) Zeitspanne festgelegt werden, bis zu der eine jeweils nächste Datensendung R1 empfangen werden sollte (z. B. 104 % x dte). Dies ermöglicht eine Bewertung der nächsten Datensendung R1 anhand des Umstandes, ob diese nächste Datensendung R1 bis zum Ende der festgelegten Zeitspanne (oder verspätet) empfangen wurde.

### Bezugszeichenliste

- 1: Fahrzeug
- W1 - W4: Fahrzeugräder
- 10: Vorrichtung zur Datenübertragung
- 20-1 - 20-4: elektronische Radeinheiten
- R1 - R4: Datensendungen der elektronischen Radeinheiten
- 30: Zentraleinheit des Fahrzeuges
- 32: Funkempfangseinrichtung
- 34: Recheneinheit
- 36: Speichereinheit
- S20-1: Erzeugung von Daten
- S20-2: Durchführung eines Sendealgorithmus
- S20-3: Senden von Datensendungen
- S30-1: Empfangen von Datensendungen
- S30-2: Auswerten von Empfangszeitpunkten
- S30-3: Bewerten von Datensendungen
- ID: Identifikationscode der Radeinheit
- M: Betriebsmodusdaten
- P: Radbetriebsparameterdaten
- t: Zeit
- dts: Zeitabstand zwischen Sendezeitpunkten
- dte: Zeitabstand zwischen Empfangszeitpunkten
- dtf: Zeitspanne für Empfangsfensterfestlegung

## Patentansprüche

1. Verfahren zur Übertragung von Daten von einer an einem Rad (W1-W4) eines Fahrzeuges (1) angeordneten Radeinheit (20-1 bis 20-4) zu einer Zentraleinheit (30) des Fahrzeuges (1), aufweisend:
- Senden der Daten in Form von zeitlich beabstandeten Datensendungen (R1-R4) von der Radeinheit (20-1 bis 20-4) zu der Zentraleinheit (30), wobei Sendezeitpunkte der Datensendungen (R1-R4) gemäß eines Sendealgorithmus von der Radeinheit (20-1 bis 20-4) festgelegt werden,
- Empfangen der von der Radeinheit (20-1 bis 20-4) gesendeten Datensendungen (R1-R4) mittels der Zentraleinheit (30),
- Auswerten von Empfangszeitpunkten, zu denen die Datensendungen (R1-R4) jeweils von der Zentraleinheit (30) empfangen werden, gemäß eines den Sendealgorithmus berücksichtigenden Auswertealgorithmus,
- Bewerten der Datensendungen (R1-R4) anhand eines Ergebnisses der Auswertung der Empfangszeitpunkte,
**dadurch gekennzeichnet, dass** nach einem jeweiligen Empfang einer Datensendung (R1-R4) die Zentraleinheit (30) eine Zeitspanne (dtf) festlegt und, sollte während dieser Zeitspanne (dtf) eine Datensendung (R1-R4) der betreffenden Radeinheit (20-1 bis 20-4) empfangen werden, diese grundsätzlich als nicht gültig bewertet wird, es sei denn, dem Inhalt dieser Datensendung (R1-R4) lässt sich entnehmen, dass die betreffende Radeinheit (20-1 bis 20-4) in einen Alarmbetriebsmodus gewechselt hat, und dass der festgestellte Empfangszeitpunkt kompatibel mit den Bestimmungen des Sendealgorithmus für den Alarmbetriebsmodus ist.

2. Verfahren nach Anspruch 1, wobei die Radeinheit (20-1 bis 20-4) zwischen mehreren Betriebsmodi umschaltbar ist und der Sendealgorithmus beinhaltet, dass eine Festlegung eines Zeitabstands zwischen aufeinanderfolgenden der Datensendungen (R1-R4) in Abhängigkeit von einem aktuellen Betriebsmodus der Radeinheit (20-1 bis 20-4) erfolgt.

3. Verfahren nach Anspruch 2, wobei die Datensendungen (R1-R4) jeweils eine Information über den aktuellen Betriebsmodus der Radeinheit (20-1 bis 20-4) und/oder eine Information über den Zeitabstand zwischen aufeinanderfolgenden der Datensendungen (R1-R4) enthalten.

4. Verfahren nach einem der vorangehenden Ansprüche, wobei das Auswerten der Empfangszeitpunkte ein Festlegen von zeitlichen Empfangsfenstern hinsichtlich der Empfangszeitpunkte und ein Vergleichen der tatsächlichen Empfangszeitpunkte mit den zeitlichen Empfangsfenstern umfasst.

5. Verfahren nach einem der vorangehenden Ansprüche, wobei das Empfangen der Datensendungen (R1-R4) der Radeinheit (20-1 bis 20-4) unter Verwendung einer Signalempfangseinrichtung (32) der Zentraleinheit (30) erfolgt, die ferner zum Empfangen von Datensendungen wenigstens einer weiteren Sendeeinrichtung ausgebildet ist, die von der Radeinheit (20-1 bis 20-4) verschieden ist.

6. Verfahren nach einem der vorangehenden Ansprüche, wobei das Auswerten der Empfangszeitpunkte eine Adaption von Ganggeschwindigkeiten eines in der Radeinheit (20-1 bis 20-4) zur Festlegung der Sendezeitpunkte verwendeten Zeitgebers und/oder eines in der Zentraleinheit (30) bei der Auswertung der Empfangszeitpunkte verwendeten Zeitgebers umfasst.

7. Verfahren nach einem der vorangehenden Ansprüche, wobei das Bewerten einer jeweiligen empfangenen Datensendung (R1-R4) eine Plausibilisierung dahingehend umfasst, ob in dieser Datensendung (R1-R4) enthaltene Daten einer weitergehenden Nutzung zuzuführen sind.

8. Verfahren nach einem der vorangehenden Ansprüche, wobei das Auswerten der Empfangszeitpunkte und/oder das Bewerten der Datensendungen (R1-R4) mittels der Zentraleinheit (30) erfolgt.

9. Verfahren nach einem der vorangehenden Ansprüche, wobei das Auswerten der Empfangszeitpunkte und/oder das Bewerten der Datensendungen (R1-R4) mittels einer von der Zentraleinheit (30) verschiedenen Einheit, welche mit der Zentraleinheit (30) über eine Datenverbindung gekoppelt ist, erfolgt.

10. Vorrichtung (10) zur Übertragung von Daten von einer an einem Rad (W1-W4) eines Fahrzeuges (1) angeordneten Radeinheit (20-1 bis 20-4) zu einer Zentraleinheit (30) des Fahrzeuges (1), aufweisend:
- eine Radeinheit (20-1 bis 20-4) ausgebildet zur Anordnung an einem Rad (W1-W4) eines Fahrzeuges (1), aufweisend Mittel zum Senden von Daten in Form von zeitlich beabstandeten Datensendungen (R1-R4) von der Radeinheit (20-1 bis 20-4) zu der Zentraleinheit (30), wobei Sendezeitpunkte der Datensendungen (R1-R4) gemäß eines Sendealgorithmus von der Radeinheit (20-1 bis 20-4) festlegbar sind, wobei die Radeinheit (20-1 bis 20-4) zwischen mehreren Betriebsmodi umschaltbar ist und wobei die Datensendungen (R1-R4) jeweils eine Information über den aktuellen Betriebsmodus der Radeinheit (20-1 bis 20-4) enthalten,
- eine Zentraleinheit (30) ausgebildet zur Anordnung an dem Fahrzeug (1), aufweisend Mittel (32) zum Empfangen der von der Radeinheit (20-1 bis 20-4) gesendeten Datensendungen (R1-R4),
- Mittel (34, 36) zum Auswerten von Empfangszeitpunkten, zu denen die Datensendungen (R1-R4) jeweils von der Zentraleinheit (30) empfangen werden, gemäß eines den Sendealgorithmus berücksichtigenden Auswertealgorithmus, wobei das Auswerten der Empfangszeitpunkte ein Festlegen von zeitlichen Empfangsfenstern hinsichtlich der Empfangszeitpunkte und ein Vergleichen der tatsächlichen Empfangszeitpunkte mit den zeitlichen Empfangsfenstern umfasst,
- Mittel (34, 36) zum Bewerten der Datensendungen (R1-R4) anhand eines Ergebnisses der Auswertung der Empfangszeitpunkte, wobei außerhalb eines Empfangsfensters empfangene Datensendungen (R1-R4) grundsätzlich als ungültig bewertet werden, es sei denn, dass es sich um eine in einem Alarmbetriebsmodus der Radeinheit (20-1 bis 20-4) gesendete Datensendung (R1-R4) handelt und der Empfangszeitpunkt der Datensendung (R1-R4) innerhalb eines Zeitraumes liegt, welchen der Sendealgorithmus für das Senden in dem Alarmbetriebsmodus zulässt.

11. Vorrichtung (10) nach Anspruch 10, wobei die Zentraleinheit (30) die Mittel (34, 36) zum Auswerten von Empfangszeitpunkten und/oder die Mittel (34, 36) zum Bewerten der Datensendungen (R1-R4) aufweist.

12. Vorrichtung (10) nach Anspruch 10 oder 11, wobei die Mittel (34, 36) zum Auswerten von Empfangszeitpunkten und/oder die Mittel (34, 36) zum Bewerten der Datensendungen (R1-R4) mit der Zentraleinheit (30) über eine Datenverbindung gekoppelt sind.

13. Computerprogrammprodukt umfassend einen Programmcode, der auf einer Datenverarbeitungseinrichtung ausgeführt ein Verfahren nach einem der Ansprüche 1 bis 9 durchführt.

14. Computerlesbares Medium aufweisend ein Computerprogrammprodukt nach Anspruch 13.

## Claims

1. Method for transmitting data from a wheel unit (20-1 to 20-4) arranged on a wheel (W1-W4) of a vehicle (1) to a central unit (30) of the vehicle (1), involving:
- sending the data in the form of data transmissions (R1-R4) at intervals of time from the wheel unit (20-1 to 20-4) to the central unit (30), wherein transmission times of the data transmissions (R1-R4) are stipulated by the wheel unit (20-1 to 20-4) according to a transmission algorithm,
- receiving the data transmissions (R1-R4) sent by the wheel unit (20-1 to 20-4) by means of the central unit (30),
- evaluating reception times at which the data transmissions (R1-R4) are each received by the central unit (30), according to an evaluation algorithm that takes into consideration the transmission algorithm,
- rating the data transmissions (R1-R4) on the basis of a result of the evaluation of the reception times,
**characterized in that** after a respective reception of a data transmission (R1-R4) the central unit (30) stipulates a period of time (dtf) and, should a data transmission (R1-R4) of the relevant wheel unit (20-1 to 20-4) be received during this period of time (dtf), said data transmission is fundamentally rated as invalid unless the content of this data transmission (R1-R4) reveals that the relevant wheel unit (20-1 to 20-4) has changed to an alarm mode of operation, and that the detected reception time is compatible with the provisions of the transmission algorithm for the alarm mode of operation.

2. Method according to Claim 1, wherein the wheel unit (20-1 to 20-4) is switchable between multiple modes of operation and the transmission algorithm involves an interval of time between successive instances of the data transmissions (R1-R4) being stipulated on the basis of a current mode of operation of the wheel unit (20-1 to 20-4).

3. Method according to Claim 2, wherein the data transmissions (R1-R4) each contain information about the current mode of operation of the wheel unit (20-1 to 20-4) and/or information about the interval of time between successive instances of the data transmissions (R1-R4).

4. Method according to one of the preceding claims, wherein the evaluating of the reception times comprises stipulating temporal reception windows for the reception times and comparing the actual reception times with the temporal reception windows.

5. Method according to one of the preceding claims, wherein the data transmissions (R1-R4) of the wheel unit (20-1 to 20-4) are received by using a signal reception device (32) of the central unit (30) that is further designed to receive data transmissions of at least one further transmission device that is different from the wheel unit (20-1 to 20-4).

6. Method according to one of the preceding claims, wherein the evaluating of the reception times comprises adapting running speeds of a timer used in the wheel unit (20-1 to 20-4) for stipulating the transmission times and/or of a timer used in the central unit (30) when evaluating the reception times.

7. Method according to one of the preceding claims, wherein the rating of a respective received data transmission (R1-R4) comprises plausibilization for whether data that this data transmission (R1-R4) contains are to be put to a further use.

8. Method according to one of the preceding claims, wherein the reception times are evaluated and/or the data transmissions (R1-R4) are rated by means of the central unit (30).

9. Method according to one of the preceding claims, wherein the reception times are evaluated and/or the data transmissions (R1-R4) are rated by means of a unit that is different from the central unit (30) and that is coupled to the central unit (30) via a data connection.

10. Apparatus (10) for transmitting data from a wheel unit (20-1 to 20-4) arranged on a wheel (W1-W4) of a vehicle (1) to a central unit (30) of the vehicle (1), having:
- a wheel unit (20-1 to 20-4) designed for arrangement on a wheel (W1-W4) of a vehicle (1), having means for sending data in the form of data transmissions (R1-R4) at intervals of time from the wheel unit (20-1 to 20-4) to the central unit (30), wherein transmission times of the data transmissions (R1-4) are stipulable by the wheel unit (20-1 to 20-4) according to a transmission algorithm, wherein the wheel unit (20-1 to 20-4) is switchable between multiple modes of operation and wherein the data transmissions (R1-R4) each contain information about the current mode of operation of the wheel unit (20-1 to 20-4),
- a central unit (30) designed for arrangement on the vehicle (1), having means (32) for receiving the data transmissions (R1-R4) sent by the wheel unit (20-1 to 20-4),
- means (34, 36) for evaluating reception times at which the data transmissions (R1-R4) are each received by the central unit (30), according to an evaluation algorithm that takes into consideration the transmission algorithm, wherein the evaluating of the reception times comprises stipulating temporal reception windows for the reception times and comparing the actual reception times with the temporal reception windows,
- means (34, 36) for rating the data transmissions (R1-R4) on the basis of a result of the evaluation of the reception times, wherein data transmissions (R1-R4) received outside a reception window are fundamentally rated as invalid unless they are a data transmission (R1-R4) sent in an alarm mode of operation of the wheel unit (20-1 to 20-4) and the reception time of the data transmission (R1-R4) is within a period of time that the transmission algorithm permits for sending in the alarm mode of operation.

11. Apparatus (10) according to Claim 10, wherein the central unit (30) has the means (34, 36) for evaluating reception times and/or the means (34, 36) for rating the data transmissions (R1-R4) .

12. Apparatus (10) according to Claim 10 or 11, wherein the means (34, 36) for evaluating reception times and/or the means (34, 36) for rating the data transmissions (R1-R4) are coupled to the central unit (30) via a data connection.

13. Computer program product comprising a program code that, when executed on a data processing device, performs a method according to one of Claims 1 to 9.

14. Computer-readable medium having a computer program product according to Claim 13.

## Revendications

1. Procédé de transmission de données depuis une unité de roue (20-1 à 20-4) disposée au niveau d'une roue (W1-W4) d'un véhicule (1) à une unité centrale (30) du véhicule (1), comprenant :
- envoi des données sous la forme d'émissions de données (R1-R4) espacées dans le temps de l'unité de roue (20-1 à 20-4) à l'unité centrale (30), les instants d'envoi des émissions de données (R1-R4) étant définis par l'unité de roue (20-1 à 20-4) conformément à un algorithme d'envoi,
- réception des émissions de données (R1-R4) envoyées par l'unité de roue (20-1 à 20-4) au moyen de l'unité centrale (30),
- interprétation des instants de réception auxquels les émissions de données (R1-R4) ont respectivement été reçues par l'unité centrale (30), conformément à un algorithme d'interprétation qui tient compte de l'algorithme d'envoi,
- évaluation des émissions de données (R1-R4) à l'aide d'un résultat de l'interprétation des instants de réception,
**caractérisé en ce qu'**après une réception respective d'une émission de données (R1-R4), l'unité centrale (30) définit un intervalle de temps (dtf) et, si une émission de données (R1-R4) de l'unité de roue (20-1 à 20-4) concernée devait être reçue pendant cet intervalle de temps (dtf), celle-ci serait en principe évaluée comme non valide, à moins que le contenu de cette émission de données (R1-R4) indique que l'unité de roue (20-1 à 20-4) concernée est passée dans un mode de fonctionnement d'alarme, et **en ce que** l'instant de réception défini est compatible avec les dispositions de l'algorithme d'émission pour le mode de fonctionnement d'alarme.

2. Procédé selon la revendication 1, l'unité de roue (20-1 à 20-4) pouvant être permutée entre plusieurs modes de fonctionnement et l'algorithme d'émission inclut le fait qu'un intervalle de temps entre des émissions de données (R1-R4) successives est défini en fonction d'un mode de fonctionnement actuel de l'unité de roue (20-1 à 20-4).

3. Procédé selon la revendication 2, les émissions de données (R1-R4) contenant respectivement une information à propos du mode de fonctionnement actuel de l'unité de roue (20-1 à 20-4) et/ou une information à propos de l'intervalle de temps entre des émissions de données (R1-R4) successives.

4. Procédé selon l'une des revendications précédentes, l'interprétation des instants de réception comprenant une définition de fenêtres de réception temporelles concernant les instants de réception et une comparaison des instants de réception réels avec les fenêtres de réception temporelles.

5. Procédé selon l'une des revendications précédentes, la réception des émissions de données (R1-R4) de l'unité de roue (20-1 à 20-4) s'effectuant en utilisant un dispositif de réception de signal (32) de l'unité centrale (30), lequel est en outre utilisé pour la réception d'émissions de données d'au moins un dispositif d'émission supplémentaire, qui est différent de l'unité de roue (20-1 à 20-4).

6. Procédé selon l'une des revendications précédentes, l'interprétation des instants de réception comprenant une adaptation des vitesses de marche d'un générateur d'horloge utilisé dans l'unité de roue (20-1 à 20-4) pour la définition des instants d'émission et/ou d'un générateur d'horloge utilisé dans l'unité centrale (30) lors de l'interprétation des instants de réception.

7. Procédé selon l'une des revendications précédentes, l'évaluation d'une émission de données (R1-R4) reçue respective comprenant une vérification de la plausibilité du fait que les données contenues dans cette émission de données (R1-R4) doivent être acheminées à une application supplémentaire.

8. Procédé selon l'une des revendications précédentes, l'interprétation des instants de réception et/ou l'évaluation des émissions de données (R1-R4) s'effectuant au moyen de l'unité centrale (30).

9. Procédé selon l'une des revendications précédentes, l'interprétation des instants de réception et/ou l'évaluation des émissions de données (R1-R4) s'effectuant au moyen d'une unité différente de l'unité centrale (30) qui est connectée à l'unité centrale (30) par le biais d'une liaison de données.

10. Arrangement (10) de transmission de données depuis une unité de roue (20-1 à 20-4) disposée au niveau d'une roue (W1-W4) d'un véhicule (1) à une unité centrale (30) du véhicule (1), comprenant :
- une unité de roue (20-1 à 20-4), configurée pour être disposée au niveau d'une roue (W1-W4) d'un véhicule (1), possédant des moyens pour envoyer des données sous la forme d'émissions de données (R1-R4) espacées dans le temps de l'unité de roue (20-1 à 20-4) à l'unité centrale (30), les instants d'envoi des émissions de données (R1-R4) pouvant être définis par l'unité de roue (20-1 à 20-4) conformément à un algorithme d'envoi, l'unité de roue (20-1 à 20-4) pouvant être permutée entre plusieurs modes de fonctionnement et les émissions de données (R1-R4) contenant respectivement une information à propos du mode de fonctionnement actuel de l'unité de roue (20-1 à 20-4),
- une unité centrale (30), configurée pour être disposée au niveau du véhicule (1), possédant des moyens pour recevoir les émissions de données (R1-R4) envoyées par l'unité de roue (20-1 à 20-4),
- des moyens (34, 36) destinés à interpréter les instants de réception auxquels les émissions de données (R1-R4) ont respectivement été reçues par l'unité centrale (30), conformément à un algorithme d'interprétation qui tient compte de l'algorithme d'envoi, l'interprétation des instants de réception comprenant une définition de fenêtres de réception temporelles concernant les instants de réception et une comparaison des instants de réception réels avec les fenêtres de réception temporelles,
- des moyens (34, 36) destinés à évaluer les émissions de données (R1-R4) à l'aide d'un résultat de l'interprétation des instants de réception, les émissions de données (R1-R4) reçues en-dehors d'une fenêtre de réception étant en principe évaluées comme non valide, à moins qu'il s'agisse d'une émission de données (R1-R4) envoyée dans un mode de fonctionnement d'alarme de l'unité de roue (20-1 à 20-4) et que l'instant de réception de l'émission de données (R1-R4) se trouve à l'intérieur d'une période qui est permise par l'algorithme d'émission pour l'envoi en mode de fonctionnement d'alarme.

11. Arrangement (10) selon la revendication 10, l'unité centrale (30) possédant les moyens (34, 36) destinés à interpréter les instants de réception et/ou les moyens (34, 36) destinés à évaluer les émissions de données (R1-R4).

12. Arrangement (10) selon la revendication 10 ou 11, les moyens (34, 36) destinés à interpréter les instants de réception et/ou les moyens (34, 36) destinés à évaluer les émissions de données (R1-R4) étant connectés à l'unité centrale (30) par le biais d'une liaison de données.

13. Produit de programme informatique, comprenant un code de programme qui, lorsqu'il est exécuté sur un dispositif de traitement de données, met en oeuvre un procédé selon l'une des revendications 1 à 9.

14. Support lisible par ordinateur comportant un produit de programme informatique selon la revendication 13.
